# EUROPEAN PATENT APPLICATION

(11) **EP 1 610 551 A2**
(43) Date of publication of application: **28.12.2005**
(21) Application number: 05013486.5
(22) Date of filing: 22.06.2005
(51) Int. Cl.: H04N 5/77

(54) **Motion picture processing apparatus, control method therefor, computer program of motion picture processing apparatus, videophone apparatus, and mobile terminal**

(30) Priority: 23.06.2004 JP 2004184373
(71) Applicant: NEC CORPORATION, Tokyo (JP)
(72) Inventor: Takeuchi, Nozomi, Minato-ku Tokyo (JP); Hosokawa, Satoshi, Minato-ku Tokyo (JP); Ohkubo, Atsushi, Minato-ku Tokyo (JP)
(74) Representative: Glawe, Delfs, Moll

(57) **Abstract**

A motion picture processing apparatus (100) is provided, including a single decoder (32), for motion picture processing and for successively decoding encoded image data inputted thereto, and a control unit (1,11) for carrying out control, in response to an instruction for starting a recording operation, issued while the decoding is performed by the decoder (32), to store (i) decoded image data, which is completely decoded by the decoder (32) first after the instruction, (ii) control information, used to obtain the decoded image data through the decoding, and (iii) encoded image data that are inputted over a period of time, after the instruction for starting the recording operation is issued, until an instruction for terminating the recording operation is issued, and are held as motion picture bit stream data.

## Description

### BACKGROUND OF THE INVENTION

### 1. Field of the Invention

The present invention relates in general to a motion picture processing apparatus and a picture recording control method therefor, and more particularly to a motion picture processing apparatus which is suitable for being applied to a videophone apparatus in a mobile terminal such as a mobile telephone, and a picture recording control method therefor.

### 2. Description of the Related Art

In recent years, a videophone function is being installed in a mobile telephone as a typical mobile terminal, along with the advancement of high performance of internal functions and along with enhancement of a data transfer speed in mobile telephones. When a videophone function is carried out in a mobile telephone, such a mobile telephone functions as a so-called videophone apparatus. It is projected that in the future, the videophone function will be more widely used in various kinds of mobile terminals such as mobile telephones.

As regards an apparatus arrangement of a conventional mobile telephone including a videophone function, several types are given as examples and will be described below.

That is, some types of known mobile telephones include a videophone function. However, with the known mobile telephones, only a sound is recorded by utilizing a sound encoder/decoder, when a so-called automatic answering machine function, a telephone conversation memo function, or the like is carried out. In other words, the known mobile telephones cannot carry out the picture recording (motion picture recording), when the known mobile telephones carry out such a function.

In addition, as for the mobile telephone of the above-mentioned type, the mobile telephone includes a set of software encoder for encoding motion picture data along with an execution of a videophone function and a software decoder for decoding encoded motion picture data. In the mobile telephone having this arrangement, in general, the processing burden imposed on the software encoder and the software decoder becomes relatively large as compared with the processing performance of a central processing unit (CPU) installed therein. For this reason, it is generally difficult to install two or more sets of software encoders and software decoders in a mobile telephone having the above-described arrangement.

Moreover, in regard to a mobile telephone of another type which includes a videophone function, for example, there is also known a type of a mobile telephone in which not only sound data, but also image data can be recorded (i.e., sound recording and picture recording can be carried out) when the automatic answering machine function, the telephone conversation memo function or the like is carried out, because a large scale integrated circuit (LSI) designed for a motion picture processing is installed therein.

In addition, an LSI including two sets of hardware encoders and hardware decoders may be installed in an apparatus in order to alleviate an excessive processing burden imposed on a CPU. In this case, two sets of hardware encoders and hardware decoders operate for different purposes during the videophone communication. More specifically, one set of hardware encoder and hardware decoder carries out encoding and decoding of motion picture information which is transmitted/received to/from a communication counterpart during the videophone communication. The other set of hardware encoder and hardware decoder carries out an encoding operation accompanying a processing for recording motion picture data and a decoding operation accompanying a processing for reproducing a recorded motion picture during such videophone communication. Consequently, during a call using the videophone, motion picture data during the call can be recorded in a self-terminal using such two sets of hardware encoders and hardware decoders for a motion picture.

A general motion picture data has an intra-coded (I) frame and a predicted (P) frame. The I frame is image data in which there is no dependency relationship among the frames. On the other hand, the P frame is image data in which there is a dependency relationship among the frames. Thus, when the general motion picture data is organized, the I frame is disposed at the head.

The conventional mobile telephone (mobile terminal) which includes a videophone function, generally, generates an I frame accompanying communication when carrying out the videophone function, and thereafter transmits and receives the P frame as motion picture stream data. In this case, during the communication using the videophone function, the I frame cannot be received due to such a processing constitution. Thus, the motion picture cannot be reproduced accurately only by utilizing the I frame which was recorded when the communication was started, and the P frame (motion picture stream data) which was recorded starting halfway through the communication.

In addition, there is known a type of apparatus in which operation parameter information as well utilized in the processing for decoding the recorded motion picture data is recorded along with the communication start similarly to the above-mentioned I frame. In this apparatus as well, the motion picture cannot be reproduced accurately by utilizing the P frame (motion picture stream data) which was recorded starting halfway through the communication.

In view of the above, a method is proposed in which, immediately after a command operation for motion picture recording, as a request is made to the telephone of the other party to transmit an I frame, the I frame received in response to the request is recorded as a front image. This method is proposed in JP 05-095547 A, JP 07-245747 A, and JP 10-285546 A for example.

In addition, another motion picture recording method is proposed in JP 2001-251584 A for example. That is, in the method proposed in JP 2001-251584 A, frame data which has been successively reproduced (i.e., decoded image data) is temporarily stored, and the frame data is recorded in order in accordance with an input operation for issuing an instruction to record motion picture data from the frame data corresponding to a time point of the user input operation in a recording medium. In the case of the method proposed in JP 2001-251584 A, after all received motion picture data has been decoded in a mobile telephone on a reception side, the decoded image data is successively stored in the recording medium. In addition, JP 2001-251584 A proposes a method in which when being saved in the recording medium, the decoded image data is recorded as it is without being compressed (encoded), and a method in which when the image data is saved in the recording medium, the decoded image data is encoded again and the resultant image data is stored. In general, when image data is stored in a storage medium, the method in which the temporarily decoded image data is encoded again and the resultant image data is stored, is more suitable than that in which decoded image data is stored as it is without being compressed since the storage area can be efficiently used.

However, the conventional mobile telephone (mobile terminal) including the above-mentioned videophone function involves the following problems.

That is, as described above, when the picture recording is carried out during operation of the videophone function in the self-terminal, the recording medium can be effectively utilized in the case where the image data which has been temporarily decoded after its reception is encoded again and the resultant image data is recorded rather than the other case.

However, with the apparatus arrangement including only one set of motion picture processing encoder and decoder, the encoder encodes the image data as a transmission target, and the decoder decodes the received image data during the operation of the videophone function. That is, this one set of encoder and decoder is used exclusively for the purpose of carrying out the videophone function. Therefore, with the apparatus arrangement including only one set of motion picture processing encoder and decoder, the temporarily decoded image data cannot be encoded again to be recorded in the storage medium during the operation of the videophone function. The above problem occurs not only in the case where such one set of motion picture processing encoder and decoder is installed in the form of a software, but also in the case where such one set of motion picture processing encoder and decoder is installed in the form of a hardware.

Moreover, in the type of the apparatus in which the I frame or the operation parameter information is stored immediately after the start of the communication using the videophone function, since the image data which is then stored in the self-terminal is the P frame (motion picture stream data or motion picture bit stream data), the apparatus cannot reproduce the motion picture from a specific timing desired by a user.

Also, in the type of the apparatus in which two sets of hardware encoders and hardware decoders for the motion picture are installed in the form of an LSI dedicated to a motion picture processing, the complicated nature of the function of such an LSI is an obstacle to cost reduction. Furthermore, this problem occurs not only when two sets of the motion picture processing encoders and decoders are installed in the form of the software, but also when a high performance CPU able to execute that software must be installed.

### SUMMARY OF THE INVENTION

The present invention was made to solve the foregoing and other exemplary problems, drawbacks, and disadvantages. An exemplary feature of the present invention is to provide a motion picture processing apparatus capable of recording inputted motion picture data over an arbitrary period of time without utilizing an encoder but by utilizing a single motion picture decoder.

In an exemplary embodiment, a motion picture processing apparatus of the present invention has the following arrangement.

That is, there is provided a motion picture processing apparatus including: single decoding means (decoder) for motion picture processing and for successively decoding encoded image data inputted thereto; and control means (control circuit) for carrying out control, in response to an instruction for starting a recording operation issued while the decoding is performed by the decoding means, to store (i) decoded image data which is completed to decode by said decoding means first after the instruction, (ii) control information used to,obtain the decoded image data through the decoding, and (iii) encoded image data that are inputted over a period of time after the instruction for starting the recording operation is issued until an instruction for terminating the recording operation is issued, and are held as motion picture bit stream data.

Further, for example, the control means refers to the control information and the decoded image data as a base of a front image in response to an instruction for reproducing a motion picture issued when no encoded image data is inputted, and controls the decoding means to successively generate decoded image data as a base of a frame image following the front image based on the motion picture bit stream data, thereby reproducing a motion picture.

Further, for example, when the motion picture is to be reproduced, the control means displays a frame image based on the decoded image data as the base of the front image on a display (display device) until completion of generation of the decoded image data as the base of the frame image to be displayed following the front image.

The motion picture processing apparatus may further include temporary storage means (storage medium) for temporarily storing therein first decoded image data generated by the decoding means to be a base of a first frame image at least until second decoded image data as a base of a second frame image to be displayed following the first frame image is generated, and the control means may carry out control, in response to the instruction for starting the recording operation issued when the first frame image is displayed on the display, to store the temporarily stored first decoded image data in association with the second decoded image data as the decoded image data as the front image, and may carry out control, when the motion picture is to be reproduced, to display a frame image based on the first decoded image data on the display over a predetermined time before a frame image based on the second decoded image data is displayed.

Note that the above-mentioned object can also be attained by a control method corresponding to the motion picture processing apparatus having the above-mentioned arrangement, and a videophone apparatus and a mobile terminal each having the motion picture processing apparatus.

In addition, the above-mentioned object can also be attained by a computer program for the motion picture processing apparatus having the above-mentioned arrangement or the control method corresponding thereto, where the computer program is realized by a computer and a computer readable storage medium in which the computer program is stored.

Other exemplary features and advantages of the present invention will be apparent from the following description taken in conjunction with the accompanying drawings, in which like reference characters designate the same or similar parts throughout the figures thereof.

### BRIEF DECRIPTION OF THE DRAWINGS

The above and other exemplary aspects, features and advantages of the present invention will become more apparent from the following detailed description when taken in conj unction with the accompanying drawings wherein:
FIG. 1 is a block diagram showing an internal arrangement of a mobile telephone according to an embodiment of the present invention;
FIG. 2 is a flow chart showing control processings which a main control circuit 1 of a mobile telephone 100 according to the embodiment of the present invention executes during performance of a videophone function;
FIG. 3 is a flow chart showing motion picture recording processings which the main control circuit 1 of the mobile telephone 100 according to the embodiment of the present invention executes during performance of the videophone function;
FIG. 4 is a flow chart showing reproduction processings which the main control circuit 1 of the mobile telephone 100 according to the embodiment of the present invention executes after the motion picture data is recorded;
FIG. 5 is a diagram explaining a relationship between an operation for recording motion picture data and data recorded in respective areas of a motion picture storage memory 4 in the embodiment of the present invention; and
FIG. 6 is a diagram explaining a relationship between an operation for recording motion picture data and data recorded in respective areas of the motion picture storage memory 4 in a modification of the embodiment of the present invention.

### DETAILED DESCRIPTION OF THE EXEMPLARY EMBODIMENTS

Exemplary embodiments of the present invention will now be described in detail in accordance with the accompanying drawings.

A motion picture processing apparatus according to the present invention will hereinafter be described in detail based on an embodiment in which the motion picture processing apparatus according to the present invention is applied to a videophone function in a mobile telephone as a typical mobile terminal.

### <Arrangement of Mobile Telephone 100>

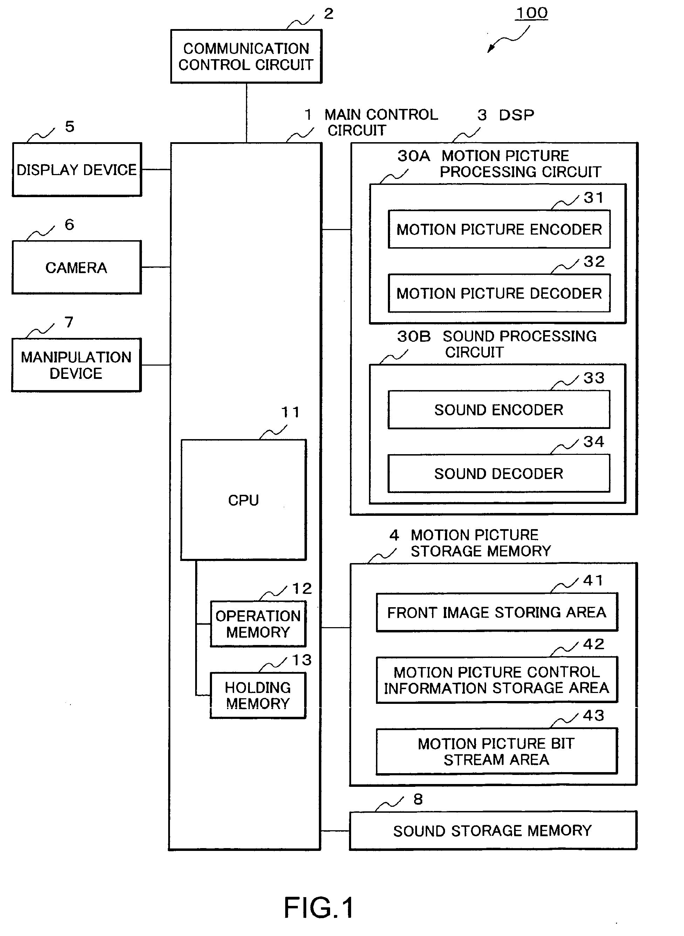

FIG. 1 is a block diagram showing an internal arrangement of a mobile telephone according to an embodiment of the present invention. A mobile telephone 100 shown in FIG. 1 mainly includes: a main control circuit 1; a communication control circuit 2; a digital signal processor (DSP) 3; a motion picture storage memory 4; a display device (display) 5; a camera 6; a manipulation device 7; and a sound storage memory 8.

That is, the communication control circuit 2 carries out the communication control with an external apparatus (communication with a communication counterpart through a base station) during performance of a videophone function for example in accordance with an instruction issued from the main control circuit 1.

The DSP 3 includes a motion picture processing circuit 30A and a sound processing circuit 30B.

The motion picture processing circuit 30A, as shown in FIG. 1, includes a single set of motion picture processing encoder 31 and decoder 32 each of which is configured in the form of hardware as an example. In the motion picture processing circuit 30A, the set of motion picture processing encoder 31 and decoder 32 (motion picture encoder 31 and motion picture decoder 32) encodes and decodes motion picture data along with picture recording, motion picture reproduction or the like in accordance with an instruction issued from the main control circuit 1. In this embodiment, the motion picture processing circuit 30A carries out, for example, the encoding and decoding for the motion picture data during performance of the videophone function, an answering machine function, or a telephone conversation memo function.

That is, in the motion picture processing circuit 30A, the motion picture processing encoder 31 encodes a signal of an image or the like captured with the camera 6. On the other hand, the motion picture decoder 32 decodes the encoded motion picture data. Here, the encoded motion picture data, for example, indicates motion picture data received from the communication counterpart during the performance of the videophone function, motion picture data contained in a recorded motion picture file, or the like.

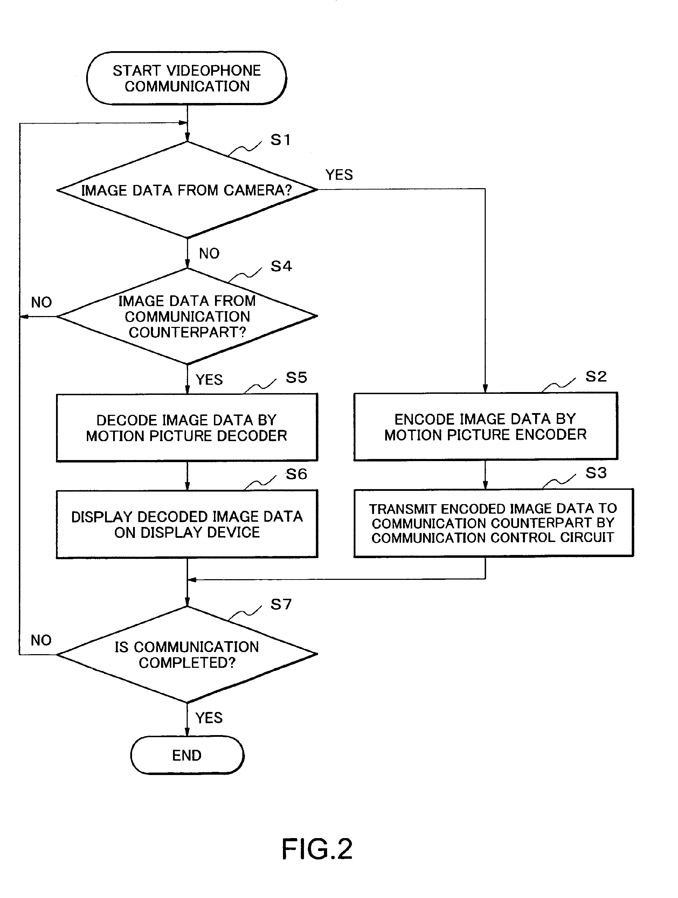

Note that parts of the motion picture processing encoder 31 and decoder 32 in this embodiment will be described later with reference to FIGS. 2 to 5.

On the other hand, the sound processing circuit 30B, as shown in FIG. 1, includes a single set of sound processing encoder 33 and a sound processing decoder 34 each of which is configured in the form of hardware as an example. In the sound processing circuit 30B, a single set of sound processing encoder 33 and decoder 34 encode and decode the sound data along with the sound recording, the sound reproduction, and the like in accordance with an instruction issued from the main control circuit 1. For example, the sound processing circuit 30B carries out the encoding and decoding of the sound data synchronously with the encoding and decoding operations by the motion processing circuit 30A during the operation of the above-mentioned functions.

The motion picture storage memory 4 is a non-volatile storage medium for storing therein the motion picture data accompanying the picture recording, the motion picture reproduction, and the like during performance of the videophone function, the answering machine function, the telephone conversation memo function, or the like. The motion picture storage memory 4, as shown in FIG. 1, includes a front image recording portion 41, a motion picture control information storage area 42, and a motion image bit stream storage area 43. Here, a flash memory, a memory card adapted to be detachably inserted into the mobile telephone 100, a miniature hard disc drive device, or the like can be adapted as the motion picture storage memory 4.

The display device 5 displays thereon motion picture data which has been received from the communication counterpart during the operation of the videophone, the captured image in the self-terminal, and the reproduced image or the like of the motion image data previously recorded in the motion picture storage memory 4 in accordance with an instruction issued from the main control circuit 1.

The camera (image pickup device) 6 captures an image (motion picture or still picture) in the self-terminal during the operation of the videophone function in accordance with an instruction issued from the main control circuit 1.

The manipulation device 7 is an input unit such as a ten key switch or a pointing device which a user manipulates in order to input therethrough an instruction to the mobile telephone 100.

The sound storage memory 8 is a non-volatile storage medium for storing therein the sound data, for example, synchronously with a corresponding processing for storing the motion picture data, during performance of the videophone function, the automatic answering machine function, the telephone conversationmemo information, or the like. For example, a flash memory, a memory card adapted to be detachably inserted into the mobile telephone 100, a miniature hard disc drive device, or the like can be adopted as the motion picture storage memory 4 similarly to the case of the motion picture storage memory 4. In addition, the sound storage memory 8 may be physically integrated with the motion picture storage memory 4.

The main control circuit 1 includes a CPU 11, an operation memory (a backup memory such as a random access memory) 12, and a holding memory (non-volatile memory) 13. In the main control circuit 1, the CPU 11, while using the operation memory 12 as a work area, executes the software program which is previously stored in the holding memory 13, thereby managing the operation control for the above-mentioned blocks which the mobile telephone 100 includes.

Note that, it is supposed that the main control circuit 1 includes a multiplexing/separating circuit (not shown in FIG. 1). The multiplexing/separating circuit has a general separation function of separating data received from the communication counterpart into the motion picture data and the sound data. In addition, the multiplexing/separating circuit includes a general multiplexing circuit for multiplexing the encoded data generated by the motion picture processing encoder 31 and the encoded data generated by the sound processing encoder 33, prior to transmission of the encoded data generated by the motion picture processing encoder 31 and the encoded data generated by the sound processing encoder 33 through the communication control circuit 2.

In this embodiment, the CPU 11 suitably executes a control program (not shown in FIG. 1) which will be described later with reference to FIGS. 2 to 4, during performance of the videophone function, the automatic answering machine function, the telephone conversation memo function, or the like. In addition, at this time, the CPU 11 executes such a control program, and carries out the operation control for the sound processing encoder 33 and the sound processing decoder 34 within the DPS 3 (the sound processing circuit 30B).

Note that this embodiment, as an example, adopts the apparatus arrangement in which the sound processing encoder 33 and decoder 34 include hardware as described above. However, the sound processing encoder 33 and decoder 34 may also be realized by executing the software program in the CPU 11. That is, the general arrangement can be adopted for the sound processing encoder 33 and decoder 34. themselves in this embodiment, so its detailed description is omitted in this embodiment.

In addition, the processing for encoding and decoding the sound data using the sound processing encoder 33 and decoder 34, and the processing for writing and reading the sound data to and from the sound recording memory 8 are suitably executed synchronously with such processings for the corresponding image data in accordance with the general procedure, so their subsequent descriptions in this embodiment are omitted.

In addition, one set of motion picture processing encoder 31 and decoder 32 which the mobile telephone 100 includes is not limited to hardware exemplified in FIG. 1, and thus may also be realized by executing the software program in the CPU 11.

### <Arrangement of Motion Picture Storage Memory 4>

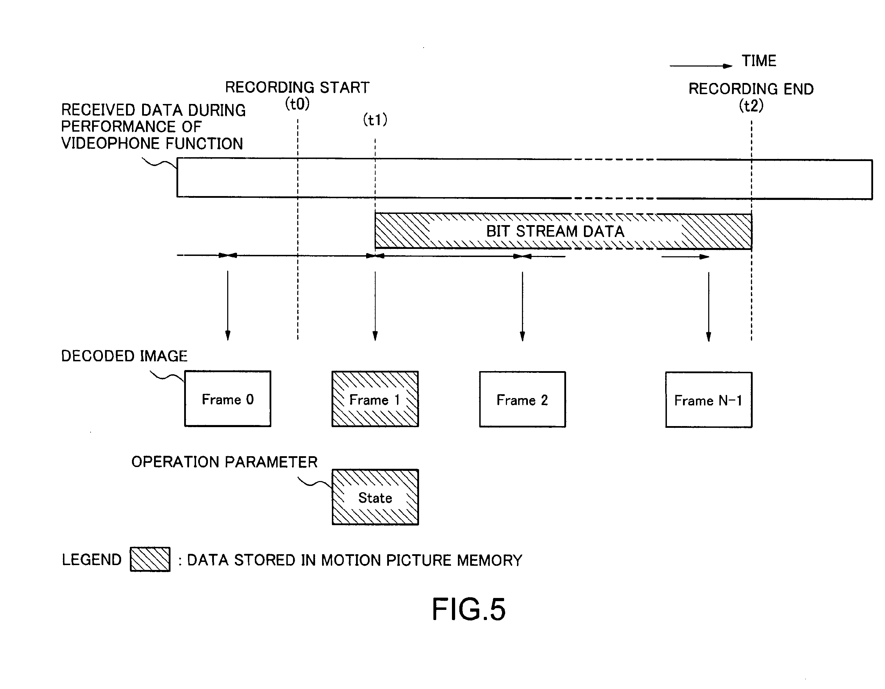

An arrangement of the motion picture storage memory 4 will be described with reference to FIG. 5. FIG. 5 is a diagram explaining a relationship between the motion picture recording operation and the data stored in respective areas of the motion picture storage memory 4 in this embodiment of the present invention. In FIG. 5, a block diagonally shaded represents the data stored in the motion picture storage memory 4.

That is, in this embodiment, the motion picture processing decoder 32, for example, repeatedly executes the decoding processing by utilizing the I frame which was received from the communication counterpart when the videophone function was started to execute, and the motion picture bit stream data which was thereafter received as the P frame, thereby successively generating decoded image data. The frame image based on the decoded image data is displayed as the motion picture on the display device 5.

In this embodiment, the main control circuit 1 (CPU 11) can detect operations for starting the motion picture recording (picture recording) at an arbitrary timing (at "t0" exemplified in FIG. 5) while the encoded data is successively generated. Here, the operation for starting the motion picture recording, for example, is a predetermined input manipulation for:the manipulation device 7 by a user (note that the manipulation for starting the motion picture recording may also be automatically started in accordance with conditions which the user sets in advance).

When detecting the manipulation for starting the motion picture recording at the timing t0, the main control circuit 1 stores decoded data for which the motion picture processing decoder 32 firstly completes the decoding ("Frame 1" exemplified in FIG. 5) at a subsequent timing ("t1" exemplified in FIG. 5) after the timing t0 in a front image recording area 41.

In addition, the main control circuit 1 successively stores the motion picture bit stream data which has been received from the communication counterpart following the timing t1 and subsequent timings in a motion picture bit stream storage area 43. Here, in the case of the example shown in FIG. 5, the motion picture bit stream data stored in the motion picture bit stream storage area 43 is image data (P frame) which is used when the frame images in Frame 2 and in subsequent Frames are generated.

Moreover, the main control circuit 1 stores an operation parameter (motion picture control information: "state" exemplified in FIG. 5) , required when encoding the decoded data (Frame 1) for which the decoding has been completed at the timing t1, in a motion picture control information storage area 42.

Meanwhile, the motion picture bit stream data (motion picture stream data) stored in the motion picture bit stream storage area 43 is the P frame which is received from the communication counterpart during performance of the videophone function. Here, the P frame is the image data containing a dependency relationship among the frames. For this reason, in order to generate the frame image for the motion picture (i . e. , the decoded data) in the motion picture processing decoder 32, there are required not only the motion picture bit stream data as the P frame, but also the image data corresponding to the I frame having no dependency relationship among the frames.

Therefore, in this embodiment, during reproduction of the motion image which has been previously recorded, the decoded data (Frame 1) which was stored in the front image storage area 41 during the picture recording before the reproduction is used as the front image corresponding to the I frame. That is, when being instructed to reproduce the motion picture after the motion picture data had been recorded as described above, the motion picture processing decoder 32 refers to the frame image data (Frame 1) stored in the front image storage area 41 as the front image, and reproduces the motion picture based on the motion picture bit stream data stored in the motion picture bit stream storage area 43. In addition, during the reproduction of the motion picture, the main control circuit 1 refers to the operation parameter ("state") stored in the motion picture control information storage area 42.

### <Operation Control by Main Control Circuit 1>

Hereinafter, the more concrete operation control by the main control circuit 1 (CPU 11) will be described with reference to FIGS. 2 to 4.

### Videophone Function

Firstly, a description will be given with respect to an outline of the operation control which the main control circuit 1 carries out when the mobile telephone 100 carries out the videophone function. In this embodiment, the mobile telephone 100 carries out the videophone function, thereby functioning as a so-called videophone apparatus.

FIG. 2 is a flow chart showing control processings which the main control circuit 1 of the mobile telephone 100 executes when the mobile telephone 100 carries out the videophone function in this embodiment. The flow chart shows a processing procedure in the software program which the CPU 11 executes in the main control circuit 1 shown in FIG. 1.

The CPU 11 (the main control circuit 1) , for example, starts to execute the control processings shown in FIG. 2 in accordance with a predetermined input manipulation to the manipulation device 7 by a user. At the start of the videophone communication, the CPU 11 instructs the motion picture processing encoder 31 to execute a processing for encoding image data on a captured image in response to an input of the image captured with the camera 6 (YES in Step S1, and Step S2).

In general, the CPU 11 carries out the actual operation control for the motion picture processing encoder 31 and the motion picture processing decoder 32 through the DSP 3 (the motion picture processing circuit 30A). However, in this embodiment, for convenience in description, it is exemplarily described that the CPU 11 (the main control circuit 1) directly controls the motion picture processing encoder 31 and the like within the DSP 3.

Then, the CPU 11 instructs the communication control circuit 2 to transmit the encoded image data outputted from the motion picture processing encoder 31 to the communication counterpart (Step S3).

On the other hand, upon reception of the motion picture data by the communication control circuit 2 from the communication counterpart, the CPU 11 instructs the motion picture processing decoder 32 to execute a processing for decoding the motion picture data (NO in Step S1, YES in Step S4, and Step S5). Then, the CPU 11 instructs the display device 5 to execute a processing for displaying thereon the decoded image data outputted from the motion picture detector 32 (Step S6).

Thus, the CPU 11 repeatedly executes the above-mentioned processings from Step S1 to Step S6 until the videophone communication is completed (Step S7). Here, the CPU 11 completes the videophone communication processing upon detection of a predetermined input manipulation to the manipulation device 7 by the user.

### Motion Picture Recording Processing

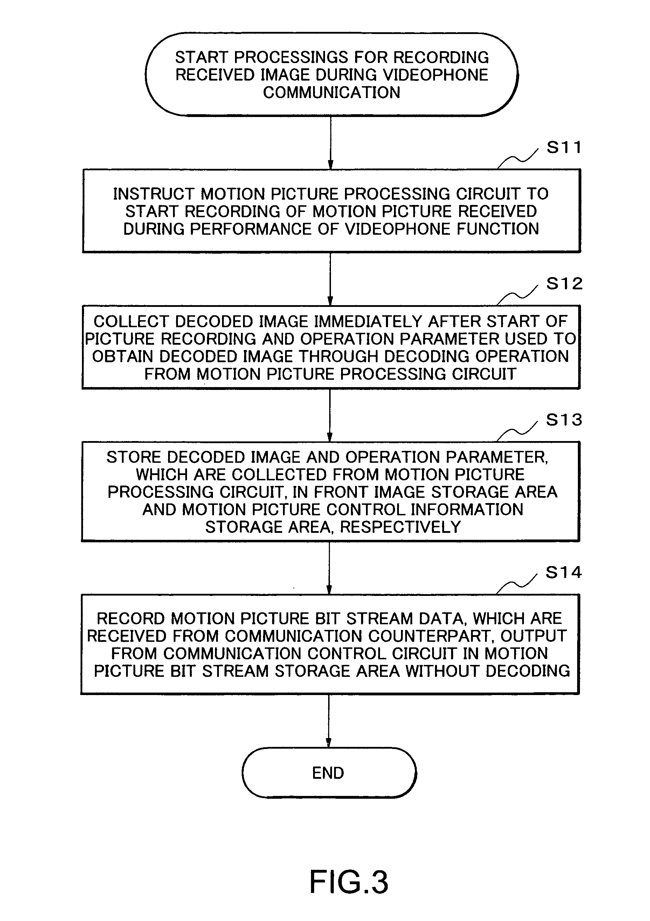

Next, a description will be given with respect to a case where the videophone image data is recorded while the mobile telephone 100 functions as the videophone apparatus as described above. FIG. 3 is a flow chart showing picture recording processing which the main control circuit 1 of the mobile telephone 100 executed during performance of the videophone function in this embodiment. The flow chart shows a processing procedure in the software program which the CPU 11 executes in the main control circuit 1 shown in FIG. 1.

The CPU 11 (the main control circuit 1) starts to execute the motion picture recording (picture recording) processing shown in FIG. 3, for example, upon detection (corresponding to the timing t0 shown in FIG. 5) of a predetermined input manipulation to the manipulation device 7 by the user during the videophone communication carried out in accordance with the control processings shown in FIG. 2. Then, the CPU 11 firstly instructs the motion picture processing circuit 30A to start recording the motion picture image data which is received during performance of the videophone function (Step S11).

The CPU 11 collects, in accordance with the instruction issued in Step S11, the decoded image data which has been outputted from the motion picture processing decoder 32 within the motion picture processing circuit 30A immediately after the start of the picture recording (corresponding to the timing t1 shown in FIG. 5), and also collects the operation parameter which has been used to obtain the decoded image data through the decoding operation (Step S12).

The CPU 11 stores the decoded image data collected in Step S12 in the front image storage area 41 within the motion picture storage memory 4 (Step S13). In addition, the CPU 11 stores the operation parameter collected in Step S12 in the motion picture control information storage area 42 within the motion picture storage memory 4 (Step S13).

Also, the CPU 11 records the motion picture bit stream data which has been received from the communication counterpart through the communication control circuit 2 in the motion picture bit stream storage area 43 as it is (Step S14). Those recording processings are continuously executed until, for example, a predetermined input operation (an operation for completing picture recording) from the user to the manipulation device 7 is detected (at the timing t2 shown in FIG. 5).

Here, the processing in Step S14 is a processing executed independently of the decoding processing (in Step S5 shown in FIG. 2) which the motion picture processing decoder 32 successively executes by utilizing the motion picture bit stream data in order to display the motion picture on the display device 5 during the videophone communication.

Then, the CPU 11 completes the processings for recording the motion picture image data which has been received during performance of the videophone function, for example, in accordance with a predetermined input manipulation from the user to the manipulation device 7 (those recording processings may also be automatically started in accordance with conditions which the user sets in advance).

### Motion Picture Reproducing Processing

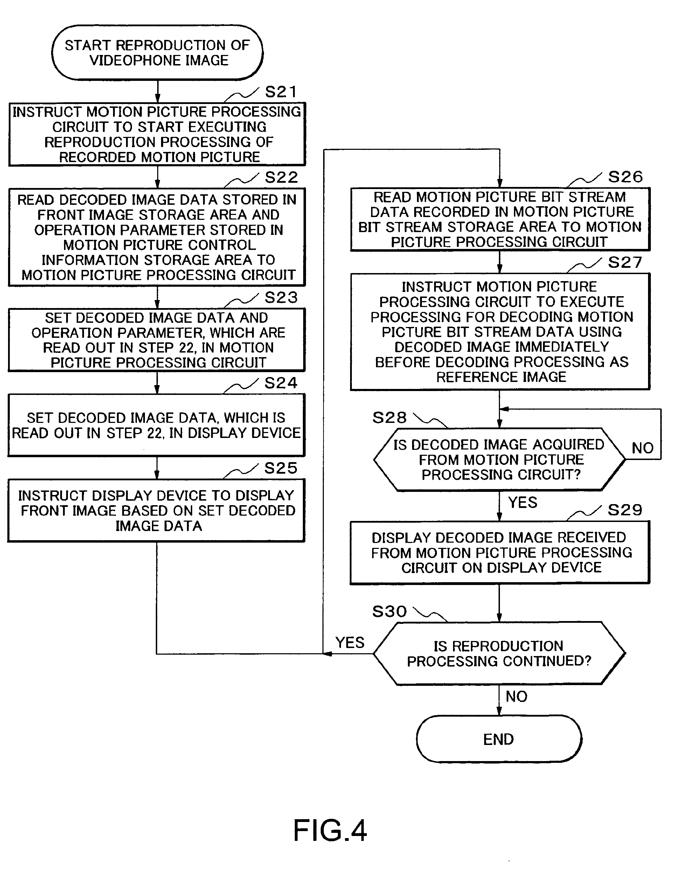

Next, a description will be given with respect to a case where the motion picture the data on which is received is reproduced after the videophone image data is recorded while the mobile telephone 100 functions as the videophone apparatus as described above. FIG. 4 is a flow chart showing a reproduction processing which the main control circuit 1 of the mobile telephone 100 executes after the motion picture data is recorded in this embodiment. This flow chart shows a processing procedure in the software program which the CPU 11 executes in the main control circuit 1 shown in FIG. 1.

The CPU 11 (the main control circuit 1) starts to execute the motion picture reproducing processing shown in FIG. 4, for example, upon detection of a predetermined input manipulation to the manipulation device 7 by the user. The CPU 11 instructs the motion picture processing circuit 30A (the motion picture processing decoder 32) to start executing a processing for reproducing the recorded videophone image (Step S21).

Then, the CPU 11 reads out the decoded image data stored in the front image storage area 41, and the operation parameter stored in the motion image control information storage area 42 from the motion image storage memory 4 (Step S22). Here, the decoded image data and the operation parameter are the information which had been previously stored in the motion image recording memory 4 through the above-mentioned picture recording processings (FIG. 3).

The CPU 11 issues an instruction to set both the decoded image data and the operation parameter, which have been read out in Step S22, in the motion picture processing decoder 32 within the motion picture processing circuit 30A (Step S23).

Moreover, the CPU 11 sets the decoded image data, which is read out in Step S22, in the display device 5 (Step S24). Then, the CPU 11 instructs the display device 5 to display thereon the front image (Frame 1 in the example shown in FIG. 5) based on the decoded image data set in the display device 5 (Step S25) .

Note that, in Step S24, a processing may be adopted in which, the decoded image data may be transferred to the display device 5 after the decoded image data set in the motion picture processing circuit 30A in Step S23 is read out from the motion picture processing circuit 30A, to thereby set the decoded image data in the display device 5.

Next, the CPU 11 reads out the motion picture bit stream data recorded in the motion picture bit stream storage area 43 to the motion picture processing decoder 32 within the motion picture processing circuit 30A (Step S26).

Then, the CPU 11 instructs the motion picture processing decoder 32 to execute a processing for decoding the motion picture bit stream data read out in Step S26 using an image based on the decoded image data immediatelybefore the decoding processing as a reference image (Step S27). Here, the decoded image data immediately before the decoding processing means either the decoded image data as the front image data which was acquired in Step S23 for the present control period or the decoded image data which was acquired in the decoding processings (Step S27) executed by the motion picture processing decoder 32 itself for the last control period.

Upon reception of the image data decoded in Step S27 from the motion picture processing decoder 32 (the motion picture processing circuit 30A) , the CPU 11 instructs the display device 5 to display thereon the frame image based on the decoded image data (YES in Step S28, and Step S29).

Then, the CPU 11 repeatedly executes from the processing in Step S26 and onward' until a predetermined completion instruction is detected in Step S30. As a result, the display device 5 successively displays thereon the frame images (Frame 2 to Frame N-1) as motion images following the front image (Frame 1).

According to the mobile telephone 100 of this embodiment described above, with the apparatus arrangement including one set of motion picture processing encoder and decoder, the motion picture data which is received during operation of the videophone function can be recorded over an arbitrary period of time (e. g., a period of time from the timing t0 (t1) to the timing t2 shown in FIG. 5) by utilizing the single motion picture processing decoder, without utilizing the encoder.

Note that the wording "without utilizing the encoder" means that utilizing no motion picture processing encoder 31 which is dedicated for the purpose of transmitting the motion picture data from the self-terminal during operation of the videophone function, (which is also applied to a modified example which will be described below).

### <Modification of Embodiment>

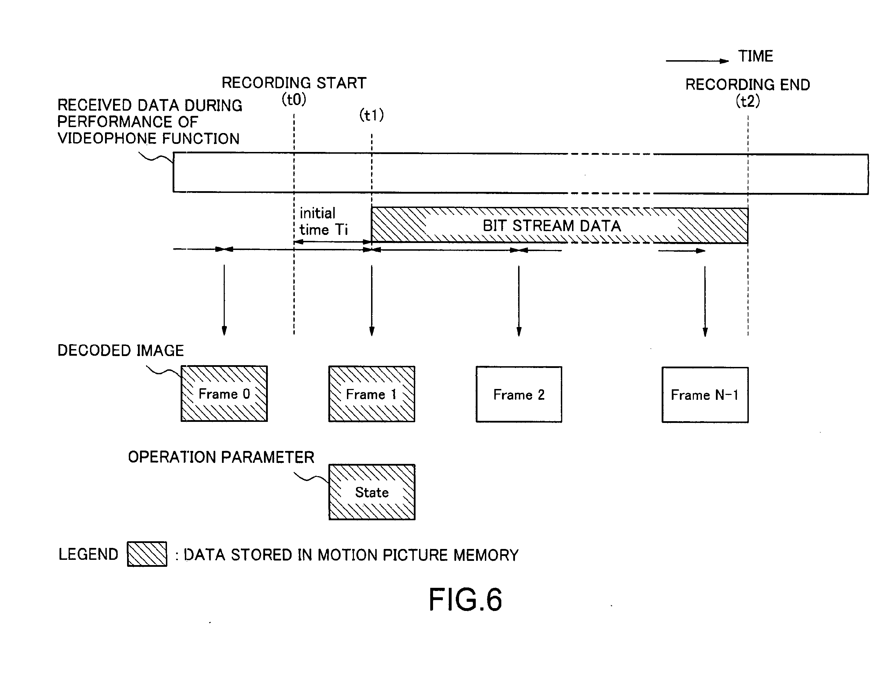

Next, a modified example based on the above-mentioned embodiment will be described with reference to FIG. 6. In the following description, characteristic parts of this modified example are mainly stated and a redundant description with respect to the same constitution as that of the above-mentioned embodiment is omitted.

In the above-mentioned embodiment, as shown in FIG. 5, a time lag occurs between the timing t0 at which the instruction to start the picture recording is inputted and the timing t1 at which the data is actually started to be stored in the respective areas of the motion picture storage memory 4. That is, with the processing constitution of the above-mentioned embodiment, the frame images from the frame image (Frame 1) displayed on the display device 5 at the timing t1 and the frame images onward are recorded. In the actual apparatus, this time lag is a period of time so short in view of the visual property of a human being that can be disregarded.

However, with such a processing constitution, though the user carries out the recording start operation with the frame image (Frame 0) displayed on the display device 5 at the desired timing (t0) as a basis, the reproducing operation is started from the frame image (Frame 1) different from the frame image (Frame 0) when the motion picture is thereafter reproduced. Consequently, for example, in the case of specifications in which a display rate in recording the motion picture data is slow, there is a fear that a user is given a feeling of strangeness when the motion picture is reproduced. For this reason, ideally, it is desirable to provide a processing constitution with which the recording can be carried out from the frame image (Frame 0) displayed on the display device 5 at the timing t0 at which the instruction to start the picture recording operation is inputted.

Thus, in this modification, a description will be given with respect to a processing constitution with which the recording operation can be carried out from the frame image displayed on the display device 5 at the time point (the timing t0) of start of the picture recording operation.

FIG. 6 is a diagram explaining a relationship between the motion picture recording operation in this modification of the embodiment according to the present invention and the data stored in the respective areas of the motion picture storage memory 4. In FIG. 6, a diagonally shaded block represents the data which is stored in the motion picture storage memory 4 when the picture recording processing (FIG. 3) is executed.

In this modification, in addition to the data which is stored in the respective areas of the motion picture storage memory 4 as described above with reference to FIG. 5, the decoded image data as a base of the frame image (Frame 0) which was displayed on the display device 5 at the time point (at the timing t0) of start of the picture recording operation is stored, for example, in the motion picture storage memory 4. When the motion picture is reproduced, prior to the operation for displaying the frame image from the frame image (Frame 1) and the flame images onward, the main control circuit 1 (CPU 11) firstly instructs the display device 5 to display thereon the frame image (Frame 0). Note that, in the case where the input manipulation for starting the picture recording is carried out at the desired timing by the user, for example, the timing cannot be estimated by the apparatus.

From this regard, in the modification, the following processings are executed in the control processings (FIG. 2) which are executed during performance of the videophone function, and the recording processings (FIG. 3) which are executed during performance of the videophone function, in order to realize such a processing constitution.

That is, when the motion picture processing decoder 32 generates the decoded image data in Step S5, the CPU 11 not only instructs the display device 6 to display thereon the decoded image data thus generated, but also temporarily stores the decoded image data, for example, within the operation memory 12 or within the motion picture processing circuit 30A over a predetermined period of time. This processing is to ensure the decoded image data corresponding to the above-mentioned frame image (Frame 0) in the recording processings in this modification.

Here, a period of time over which the decoded image data corresponding to Frame 0 is temporarily stored is at least the period over which the decoded image data as a base of Frame 1 (second frame image) which is displayed next to Frame 0 (first frame image) is generated by the motion picture processing decoder 32. Note that, the period of time for the temporary storage should be made minimum from the viewpoint of minimizing a memory capacity required for the mobile telephone 100.

Next, when storing the data on Frame 1 in the respective areas of the motion picture processing circuit 30A in Step S13, the CPU 11 further executes the following processing upon the initiation of the recording processings. That is, the CPU 11 stores the decoded image data of Frame 0, which is temporarily stored in the operation memory 12 or the like as described above and is obtained before Frame 1 by one, in the motion picture storage memory 4 by associating the data of Frame 0 with the data on Frame 1.

In addition, in this modification, a period of time over which Frame 0 is displayed, for example, is an initial time (Ti) from the timing t0 at which the recording start operation is detected to a time point when the motion picture processing decoder 32 firstly completes the decoding. Data representing the time Ti may be stored in the holding memory 13 or the like in advance.

According to the modification which has been described so far, similarly to the above-mentioned embodiment, with the apparatus arrangement including one set of motion picture processing encoder and decoder, the motion picture data which received during performance of the videophone function can be recorded over an arbitrary period of time (e.g., for a period of time from the timing t0 to the timing t2 shown in FIG. 6) and by utilizing the single motion picture processing decoder without utilizing the encoder.

Moreover, according to the modification, in the motion picture recording, the recording can be started from the frame image (Frame 0) which was displayed on the display device 5 at the timing t0 at which the start instruction was inputted. Consequently, the user feels no strangeness during reproduction of the recording image, so the more excellent operationality and convenience are obtained.

In addition, according to the above-mentioned embodiment and the modification thereof, the necessary storage capacity can be significantly reduced as compared with that of a conventional apparatus for temporarily storing the image data successively decoded for the display in the self-terminal during the videophone communication to preserve the decoded image data after completion of the communication with the data format being held as it is, or a conventional apparatus for temporarily storing the image data successively decoded for the display in the self-terminal during the videophone communication to preserve the image data after a re-encoding operation after completion of the communication. This effect to reduce the storage capacity is realized in the above-mentioned embodiment with the apparatus arrangement for preserving the encoded image data as the front image, the operation parameter utilized when the encoded image data is decoded, and the bit stream data held as it is in a state where it was received, over an arbitrary period of time during performance of the videophone communication. In addition, the effect to reduce the storage capacity is realized in the above-mentioned modification with the apparatus arrangement for preserving the encoded image data as the base of the frame image displayed at the time point when instruction to start to execute the picture recording processings is inputted in the motion picture recording memory 4. Consequently, the apparatus arrangement is suitable for miniaturization of the mobile telephone and for cost reduction.

In addition, according to the embodiment and the modification thereof, with the apparatus arrangement including one set of motion picture processing encoder and decoder, it is possible to realize the videophone function and the recording of the motion picture image which has been received over an arbitrary period of time during performance of the videophone function. In other words, according to this embodiment and the modification thereof, with such an apparatus arrangement, it is possible to make the motion picture data, which has been received during performance of the videophone function, recorded over an arbitrary period of time and by utilizing the single motion picture processing decoder without utilizing the encoder.

Consequently, according to the apparatus arrangement of this embodiment and the modification thereof, the apparatus arrangement can be made simpler than that of the conventional apparatus requiring two encoders. Here, the two encoders include a first encoder for transmission during the videophone communication, and a second encoder for re-encoding the image data decoded after its reception in order to record the resultant image data during performance of the videophone function. Thus, there is no need to provide the software that can realize such two encoders nor the CPU that can execute the software, so the apparatus arrangement is suitable for miniaturization of the mobile telephone and for cost reduction.

Note that, in the above-mentioned embodiment and the modification thereof, the description has been given with respect to the processing constitution for recording the motion picture data received during performance of the videophone function over an arbitrary period of time without utilizing the motion picture processing encoder 31 but by utilizing the single motion picture processing decoder 32, with such an apparatus arrangement (FIG. 1). However, such a processing constitution can also be applied to a case where the sound data received during performance of the videophone function is recorded over an arbitrary period of time synchronously with, for example, the operation for recording the motion picture data.

That is, the processing constitution with respect to the above-mentioned motion picture data can also be applied to a case where the sound data received during performance of the videophone function is recorded over an arbitrary period of time without utilizing the sound processing encoder 33 but by utilizing the single sound processing decoder 34, with the apparatus arrangement shown in FIG. 1 for example. Here, the wording "without utilizing the sound processing encoder 33" means that no sound processing encoder 33 which is dedicated to the purpose of transmitting the sound data from the self-terminal is utilized during performance of the videophone function. Consequently, the present invention can also be widely applied to a sound processing apparatus with which sound data (encoded sound data) can be reproduced in response to reception of the sound data, and the sound data being reproduced can be recorded over an arbitrary period of time, and thereafter the sound data thus recorded can be reproduced.

Inaddition, when such a processing constitution is applied to the motion picture data and the sound data in the apparatus arrangement shown in FIG. 1 for example, motion picture image data and its sound data of a communication counterpart during performance of the videophone function can be reliably recorded over an arbitrary period of time.

In addition, it is possible to embody the present invention which has been described by giving the above-mentioned embodiment and the modification thereof as examples, by providing the above-mentioned mobile telephone 100 with a computer program that can perform the functions of the flow charts (FIGS. 2 to 4), to which reference is made in the description of the above-mentioned mobile telephone 100, and then reading out the computer program to the CPU 11 of the apparatus to be executed. Also, the computer program supplied to the apparatus may be stored in a storage device such as the readable and writable holding memory 13 or a hard disc device.

Further, in the above-mentioned case, as regards a method of providing the apparatus with a computer program currently, the general methods may be adopted such as a computer program is installed in the apparatus at a manufacturing stage before shipping, a maintenance stage after the shipping, or the like, by utilizing suitable jigs, or a method of down loading a computer program from the outside through a communication line such as the Internet. In such a case, the present invention is constituted by a code of such a computer program or by a recording medium therefor.

Also, the above-mentioned embodiment and the modification thereof have been described by giving an example of the apparatus arrangement in which the present invention is applied to the mobile telephone as a typical mobile terminal. However, the present invention is not intended to be limited to such an apparatus arrangement. The present invention may also be applied to, for example, a wired telephone apparatus (such as a stationary videophone apparatus) having a videophone function, and to the various information processing apparatuses (such as a personal computer and a personal digital assistants (PDA)) each including a videophone function and a camera.

Moreover, the present invention can also be applied to an apparatus which does not include a function of transmitting motion image data from a self-apparatus to a communication counterpart unlike the above-mentioned videophone function (of a videophone apparatus). That is, the present invention can also be widely applied to a motion picture processing apparatus with which motion picture data (encoded image data) can be reproduced in response to reception of the motion picture data, and the motion picture data being reproduced can be recorded over an arbitrary period of time, and thereafter the motion picture data thus recorded can be reproduced. Examples for such a motion picture processing apparatus include a stationary household electronic apparatus such as a digital versatile disc (DVD) recorder or a hard disc drive device, and an Internet browser able to reproduce a motion image received through a broad band line.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

Further, it is the inventor's intention to retain all equivalents of the claimed invention even if the claims are amended during prosecution.

## Claims

1. A motion picture processing apparatus having single decoding means (32) for motion picture processing and for successively decoding encoded image data inputted thereto,
**characterized by** comprising:
controlmeans (1, 11) for carrying out control, in response to an instruction for starting a recording operation issued while the decoding is performed by said decoding means, to store (i) decoded image data which is completed to decode by said decoding means first after the instruction, (ii) control information used to obtain the decoded image data through the decoding, and (iii) encoded image data that are inputted over a period of time after the instruction for starting the recording operation is issued until an instruction for terminating the recording operation is issued, and are held as motion picture bit stream data.

2. The apparatus according to claim 1, **characterized in that** said control means refers to the control information and the decoded image data as a base of a front image in response to an instruction for reproducing a motion picture issued when no encoded image data is inputted, and controls said decoding means to successively generate decoded image data as a base of a frame image following the front image based on the motion picture bit stream data, thereby reproducing a motion picture.

3. The apparatus according to claim 2, **characterized in that** when the motion picture is to be reproduced, said control means displays a frame image based on the decoded image data as the base of the front image on a display (5) until completion of generation of the decoded image data as the base of the frame image to be displayed following the front image.

4. The apparatus according to claim 2 or 3, **characterized by** further comprising temporary storage means (1, 3) for temporarily storing therein first decoded image data generated by said decoding means to be a base of a first frame image at least until second decoded image data as a base of a second frame image to be displayed following the first frame image is generated, wherein:
said control means carries out control, in response to the instruction for starting the recording operation issued when the first frame image is displayed on said display (5), to store the temporarily stored first decoded image data in association with the second decoded image data as the decoded image data as the front image; and
said control means carries out control, when the motion picture is to be reproduced, to display a frame image based on the first decoded image data on said display over a predetermined time before a frame image based on the second decoded image data is displayed.

5. The apparatus according to any one of claims 1 to 4, **characterized by** further comprising communication means (2) for receiving the encoded image data from an external apparatus as a communication counterpart.

6. A videophone apparatus **characterized by** comprising the apparatus according to claim 5, wherein:
said control means instructs said decoding means to successively decode the encoded image data received by said communication means during videophone communication.

7. A mobile terminal **characterized by** comprising the apparatus according to claim 5, wherein:
said control means instructs said decoding means to successively decode the encoded image data received by said communication means during performance of videophone function.

8. A method of controlling a motion picture processing apparatus having single decoding means (32) for motion picture processing and for successively decoding encoded image data inputted thereto, **characterized by** comprising:
storing in response to an instruction for starting a recording operation issued while decoding is performed by said decoding means (32), (i) decoded image data which is completed to decode by said decoding first after the instruction, (ii) control information used to obtain the decoded image data through the decoding, and (iii) encoded image data that are inputted over a period of time after the instruction for starting the recording operation is issued until an instruction for terminating the recording operation is issued, and are held as motion picture bit stream data.

9. The method according to claim 8, **characterized by** further comprising reproducing a motion picture by causing said decodingmeans to refer to the control information and the decoded image data as a base of a front image in response to an instruction for reproducing a motion picture issued when no encoded image data is inputted, and to successively generate decoded image data as a base of a frame image following the front image based on the motion picture bit stream data.

10. The method according to claim 9, **characterized in that** said reproducing of the motion picture includes displaying a frame image based on the decoded image data as the base of the front image on a display (5) until completion of generation of the decoded image data as the base of the frame image to be displayed following the front image.

11. The method according to claim 9 or 10, **characterized by** further comprising:
temporarily storing first decoded image data generated by said decoding means to be a base of a first frame image at least until second decoded image data as a base of a second frame image to be displayed following the first frame image is generated;
storing, in response to the instruction for starting the recording operation issued when the first frame image is displayed on said display (5), to store the temporarily stored first decoded image data in association with the second decoded image data as the decoded image data as the front image; and
displaying, when the motion picture is to be reproduced, a frame image based on the first decoded image data on said display over a predetermined time before a frame image based on the second decoded image data is displayed.

12. The method according to any one of claims 8 to 11, **characterized by** further comprising receiving the encoded image data from an external apparatus as a communication counterpart.

13. A computer program for controlling an operation of a motion picture processing apparatus having single decoding means (32) for motion picture processing and for successively decoding encoded image data inputted thereto, **characterized in that** the program causing a computer to realize:
a function of storing, in response to an instruction for starting a recording operation issued while decoding is performed by said decoding means (32), (i) decoded image data which is completed to decode by said decoding means first after the instruction, (ii) control information used to obtain the decoded image data through the decoding, and (iii) encoded image data that are inputted over a period of time after the instruction for starting the recording operation is issued until an instruction for terminating the recording operation is issued, and are held as motion picture bit stream data.

14. A computer program according to claim 13, **characterized by** further causing the computer to realize a function of reproducing a motion picture by causing said decoding means to refer to the control information and the decoded image data as a base of a front image in response to an instruction for reproducing a motion picture issued when no encoded image data is inputted, and to successively generate decoded image data as a base of a frame image following the front image based on the motion picture bit stream data.

15. A computer program according to claim 14, **characterized by** further causing the computer to realize the functions of:
temporarily storing in a storage medium first decoded image data generated by said decoding means to be a base of a first frame image at least until second decoded image data as a base of a second frame image to be displayed following the first frame image is generated;
storing, in response to the instruction for starting the recording operation issued when the first frame image is displayed on a display (5), to store the temporarily stored first decoded image data in association with the second decoded image data as the decoded image data as the front image; and
displaying, when the motion picture is to be reproduced, a frame image based on the first decoded image data on the display over a predetermined time before a frame image based on the second decoded image data is displayed.
